# EUROPÄISCHE PATENTSCHRIFT

(11) **EP 2 612 110 B1**
(45) Veröffentlichungstag und Bekanntmachung des Hinweises auf die Patenterteilung: **14.10.2015**
(21) Anmeldenummer: 11748313.1
(22) Anmeldetag: 25.07.2011
(51) Int. Cl.: G01C 11/02

(54) **VERFAHREN ZUR ERFASSUNG VON AGRARFLÄCHEN DURCH ABFLIEGEN MIT GEOREFERENZIERTER OPTISCHER AUFZEICHNUNG**
METHOD FOR SAMPLING OF AGRICULTURAL SURFACES BY FLYING OVER THEM WITH GEOREFERENCED OPTICAL RECORDING
PROCÉDÉ POUR L'ÉCHANTILLONNAGE DE SURFACES AGRICOLES PAR LEUR SURVOL AVEC ENREGISTREMENT OPTIQUE GÉORÉFÉRENCÉ

(30) Priorität: 24.09.2010 DE 102010046479; 13.09.2010 DE 102010045216; 31.08.2010 DE 102010035963
(43) Veröffentlichungstag der Anmeldung: 10.07.2013
(73) Patentinhaber: Lacos Computerservice GmbH, 07937 Zeulenroda (DE)
(72) Erfinder: DAMME, Bernd, 07937 Langenwolschendorf (DE); DAMME, Thomas, 07907 Göschitz (DE)
(74) Vertreter: Kruspig, Volkmar
(86) Internationale Anmeldenummer: PCT/EP2011/062752
(87) Internationale Veröffentlichungsnummer: WO 2012/028386

(56) Entgegenhaltungen:
- DE-U1-202008 015 324
- US-A- 5 555 018
- US-A- 5 878 356

## Beschreibung

Die Erfindung betrifft ein Verfahren zur Erfassung von Daten für eine teilflächenspezifische Behandlung oder Bearbeitung von Agrarflächen mittels Befliegung durch ein unbemanntes Kleinfluggerät, insbesondere einen Minihubschrauber gemäß Oberbegriff des Patentanspruchs 1.

Gemäß dem bisherigen Stand der Technik ist die Erfassung von Daten für die teilflächenspezifische Bearbeitung von Agrarflächen sehr aufwendig. Bekannt wurde die Anordnung von Sensoren auf landwirtschaftlichen Maschinen, insbesondere Traktoren oder ähnlichen Fahrzeugen, um eine Zustandserfassung im Umfeld des befahrenen Weges durchzuführen.

Ebenfalls bekannt ist es, Luftbilder oder Satellitenaufnahmen auszuwerten. Die Erstellung derartiger Bilddaten ist jedoch sehr aufwendig und im Regelfall nicht aktuell. Das Befahren von Feldern ist im Übrigen nur bis zu einer bestimmten Bewuchshöhe möglich.

Aus der DE 20 2008 015 324 U1 ist ein Kleinfluggerät mit einer Kamera vorbekannt, das ein Messsystem umfasst, um einen relativen Abstand zu einem Objekt zu ermitteln. Fliegende Kleinplattformen, auch als Mini- oder Mikrodrohnen bezeichnet, werden vorzugsweise verwendet, um optische Geräte über eine aufzunehmende Zielfläche zur Bildaufnahme zu tragen. Zum Teil navigieren derartige Flugplattformen autonom durch die Auswertung von GPS-Daten. Die Navigation bewegt sich damit in den bekannten Toleranzen des verfügbaren GPS-Systems und kann selbst bei Verwendung von Differential-GPS nur mit einem begrenzten Genauigkeitsrahmen realisiert werden.

Gemäß der DE 20 2008 015 324 U1 soll die Bildaufnahmeposition besonders präzise ansteuerbar sein und vom Zielobjekt ein genau definierter Abstand von wenigen Metern oder Zentimetern eingehalten werden. Eine solche präzise Annäherung an die Oberfläche von insbesondere landwirtschaftlichen Nutzflächen ist notwendig, um im Pflanzenschutz auch früh auflaufende Schadkräuter mit weniger als 1 mm Durchmesser zu erkennen.

Die US 5,878,356 offenbart ein fluggerätegestütztes Infrarot-Kartierungssystem für erdgebundene Ressourcen. Vorgesehen ist dort ein in einem Fluggerät angeordneter Sensor mit einer bekannten Orientierung, eine Schaltung zum Sammeln der von dem Sensor erzeugten Signale über das abgetastete Gebiet, ein System zur Georeferenzierung der gesammelten Signale sowie Mittel zur Kompensationen von Lageabhängigkeiten der erfassten Signale vom Fluggerät.

Aus dem Vorgenannten ist es daher Aufgabe der Erfindung, ein weiterentwickeltes Verfahren zur Erfassung von Daten für eine teilflächenspezifische Behandlung oder Bearbeitung von Agrarflächen mittels Befliegung durch ein unbemanntes Kleinfluggerät, insbesondere einem Minihubschrauber anzugeben, welches in der Lage ist, mit Blick auf die begrenzten Energiekapazitäten des entsprechenden Fluggeräts in vertretbarer Zeit eine große Anzahl von Informationen zu sammeln, die dann unmittelbar zur Steuerung von Erntemaschinen, zur gezielten Düngung und/oder weiteren Bodenbearbeitung oder dergleichen nutzbar sind.

Die Lösung der Aufgabe der Erfindung erfolgt mit einem Verfahren gemäß der Lehre nach Patentanspruch 1, wobei die Unteransprüche mindestens zweckmäßige Ausgestaltungen oder Weiterbildungen darstellen.

Zunächst wird von einem bekannten Verfahren zur Erfassung von Daten für eine teilflächenspezifische Behandlung oder Bearbeitung von Agrarflächen mittels Befliegung durch ein unbemanntes Kleinfluggerät ausgegangen. Das Kleinfluggerät kann ein sogenannter Quadrokopter sein. Hier handelt es sich um einen Minihubschrauber mit mehreren radial symmetrisch angeordneten Luftschrauben mit dynamischer Stabilisierung und einer sich hieraus ergebenden ausreichenden Flugruhe sowie der Möglichkeit des präzisen Navigierens auch durch einen wenig geübten Nutzer.

Es wird zunächst eine Flugroutenplanung anhand zur Verfügung stehender Schlagdaten vorgenommen. Diese Flugroutenplanung erfolgt Softwareunterstützt auf der Basis von vorhandenen Orthofotos oder der Bilddaten kommerzieller Anbieter. Für die Flugroutenplanung wird der jeweilige Schlag in Sektoren unterteilt, wobei den entsprechenden Sektoren nicht nur eine räumliche Unterteilung zugeordnet, sondern auch bildanalytische Aufgaben zugewiesen werden.

Anhand der geplanten Route wird dann das Abfliegen mit georeferenzierter optischer Aufzeichnung und Videodatenübertragung vorgenommen.

Diese Videodatenübertragung erfolgt zum Bediener des Kleinfluggeräts. Erfindungsgemäß wird an vorbestimmten Punkten eine Reduzierung der Flughöhe und eine Anzahl von Detailaufnahmen realisiert.

Zur zeitoptimalen Befliegung kann das Reduzieren der Flughöhe an den vorbestimmten Punkten automatisch erfolgen. Jedoch ist auch ein manueller Eingriff durch den Bediener möglich, z.B. wenn beim Überfliegen interessante Punkt oder Objekte erkannt werden.

Bei einer Weiterbildung des erfindungsgemäßen Verfahrens wird anhand einer in einem ersten Schritt vorgenommenen Übersichtbefliegung für den relevanten Schlag eine Detailflugroute für besonders interessierende Flächen oder Orte, sogenannte points of interest (POIs), geplant und der Fluggerätesteuerung übergeben. Hiernach erfolgt ein unmittelbares Anfliegen der POIis mit entsprechend minimierter Flughöhe und großer Detailaufnahmemöglichkeit sowie anschließender Kartierung.

Bei einer Weiterbildung der erfindungsgemäßen Lösung sind im Kleinfluggerät ein Stickstoffsensor, ein Feuchtesensor und/oder ein Temperatursensor integriert, um den Stickstoffgehalt und hieraus die Pflanzendichte, die Bodenfeuchte, die Pflanzenfeuchte und/oder die Bodentemperatur zum Ermitteln eines optimalen Bearbeitungszeitraums zu bestimmen.

Die Datenerfassung erfolgt hierbei während des Überfliegens und es werden die jeweiligen.Sensordaten den entsprechenden überflogenen Punkten zugeordnet und in die Kartierung integriert.

Ausgehend von den erfassten Sensordaten wird dann in Verbindung mit einem hochauflösenden Höhe-über Grund-Messgerät eine schlagtypische Applikationskarte erstellt.

Die Applikationskarte kann dann zur Steuerung einer Erntemaschine bzw. landwirtschaftlichen Bearbeitungsmaschine sowie zur Dokumentation eingesetzt werden.

Erfindungsgemäß ist es, anhand der Befliegungsdaten eine Auswahl geeigneter landwirtschaftlicher Maschinen für die jeweilige Bearbeitung des Bodens und/oder der Bepflanzung zu treffen.

Es wird mit der vorgestellten Lösung nicht nur eine Sammlung von optischen Daten über eine Videokamera, sondern eine Ermittlung weiterer Daten, die boden- und/oder schlagspezifisch sind, vorgenommen, um hieraus Informationen zur Steuerung von landwirtschaftlichen Maschinen und zur Dokumentation von Zuständen auf landwirtschaftlichen Flächen zu gewinnen.

In erfindungsgemäßer Weiterbildung der vorgestellten Lösung wird davon ausgegangen, dass das Fluggerät aufgrund der integrierten Sensorik eine Plattform darstellt, die hinsichtlich vorgesehener Befliegungen autonom handelt. Je nach momentan vorgegebener Aufgabe sucht das Fluggerät z.B. entlang eines Schlages Stellen, wo gereiftes Getreide beispielsweise besonders feucht oder besonders trocken ist. Es kann dann der Erntevorgang an den besonders trockenen, nicht feuchten Stellen begonnen werden. Diese Flugaufgaben werden erfindungsgemäß ohne Eingriff in die Steuerung durch eine Person vorgenommen. Mit anderen Worten findet das Fluggerät für die jeweilige gestellte Aufgabe den hierfür optimalen Suchweg selbständig, z.B. im Sinne eines zunächst auf größerer Höhe beginnenden Fluges mit dann folgender Feinsondierung durch einen Mäanderabflug in kleineren, ausgewählten Gebieten.

Die gefundenen Daten, z.B. zur vorerwähnten Feuchte eines Getreideschlags, werden verortet, d.h. georeferenziert, und zur späteren Steuerung von Land-, insbesondere Erntemaschinen zur Verfügung gestellt.

Die erfassten Daten dienen nicht nur zur Steuerung von landwirtschaftlichen Maschinen, sondern auch zur Dokumentation und Nachweisführung, z.B. bei dem Ausbringen von Düngemitteln.

Die Erfindung soll nachstehend anhand eines Ausführungsbeispiels näher erläutert werden.

Das erfindungsgemäß eingesetzte Kleinfluggerät kann von Hand gestartet werden und ist für ein autonomes Abfliegen entlang einer vorgegebenen Route, z.B. mittels GPS geeignet. Das Anhalten und Ausrichten des Fluggeräts an vordefinierten Punkten und vordefinierter Flughöhe und das exakte Einhalten der Flughöhe kann manuell durch den Bediener erfolgen.

Das Fluggerät ist in der Lage, fotografische bzw. Videoaufnahmen von Flächen vorzunehmen und die erhaltenen Bilddaten sowohl zu speichern als auch online zu einem Bildwiedergabegerät zu übertragen.

Weiterhin besitzt das Kleinfluggerät eine automatische Steuerung, die in der Lage ist, auf kürzestem Wege zum Startpunkt zurückzufliegen und dort ein Landemanöver auszuführen.

Bei einem einstufigen Verfahren der Datenerfassung wird zunächst eine Planung der Flugroute, z.B. auf der Grundlage von Orthofotos vorgenommen und es erfolgt eine Unterteilung des Schlages in Sektoren. Weiterhin wird die Höhe festgelegt und eine Simulation der Sektoren auf vorhandenen fotografischen Abbildungen umgesetzt.

Unter Berücksichtigung der jeweiligen Energiekapazität des Fluggeräts sowie der Gegebenheiten des Start- und Landeplatzes erfolgt eine Berechnung der Flugroute mittels geeigneter Programme.

Während des autonomen Befliegens des Schlages entlang der festgelegten Route erfolgt eine Online-Videoübertragung, z.B. auf einen tragbaren Computer, sowie ein gleichzeitiges Speichern von georeferenzierten Fotos und ergänzenden Sensordaten.

Wenn während des Befliegens interessante Objekte und/oder Strukturen in dem jeweiligen Sektor zu sehen sind, wird die Flughöhe entweder manuell oder automatisch durch den Bediener reduziert, bis das jeweilige Objekt oder die interessierende Struktur detailliert aufgenommen werden kann. Nach erfolgter selbständiger Aufnahme der Fotos oder Erfassung von Sensordaten wird dann das autonome Befliegen entlang der geplanten Route in der geplanten Höhe fortgesetzt.

Nach dem Landen des Kleinfluggeräts werden gespeicherte Daten abgerufen und stehen zur weiteren Verarbeitung zur Verfügung.

Bei einem mehrstufigen Verfahren wird zunächst eine analoge Planung der Flugroute so wie geschildert vorgenommen. Anhand der geplanten Flugroute wird dann eine Übersichtsbefliegung realisiert und es erfolgt nach dem Landen des Kleinfluggeräts ein Auslesen der gespeicherten Aufnahmen und sonstigen Daten zur Auswertung. Einzelfotos können hier für eine Gesamtübersicht zusammengesetzt werden.

Anhand einer ersten Analyse zum Ergebnis der Überfliegung wird dann eine weitere Planung für eine Detailbefliegung besonders interessierender Strukturen vorgenommen. Hier wird ergänzend zur Flugroute noch die jeweilige Flughöhe am Ort der geplanten Detailuntersuchung bestimmt.

Das Kleinfluggerät ist dann anhand der Flugplanungsdaten in der Lage, autonom, unmittelbar und direkt besonders interessierende Punkte anzufliegen, und zwar mit minimalem Energieverbrauch, so dass mit möglichst einer Befliegung mehrere besonders interessierende Objekte ausgewertet werden können.

Die Aufzeichnung oder Online-Übertragung der Daten erfolgt wie beim einstufigen Verfahren des Befliegens.

Für die spätere Nutzung der Daten können besonders interessante Zonen und Objekte in der Kartierung eingefärbt dargestellt werden. Im Zuge der Datenauswertung wird eine Einteilung von verschiedenen Applikationssektoren mit Festlegung von Mengen und Mittel für die Bearbeitung der Fläche, den Pflanzenschutz und/oder die Düngung realisiert.

Für jeden geplanten Einsatzfall einer landwirtschaftlichen Maschine oder eines Bodenbehandlungsmittels kann eine spezifische Applikationskarte erstellt und zur Steuerung der Landmaschine übergeben werden.

Die aufgenommenen Bild- und sonstigen Sensordaten werden für Schlagkarteien oder sonstige Dokumentationswecke verwendet.

Die vom Kleinfluggerät getragene Bildaufnahmeeinrichtung, insbesondere eine Kamera, kann zur Kartierung der Bodenbedeckung, zur Bestimmung von Schadpflanzen, zur Ermittlung von Schaderregern, zum Auffinden von Fehlstellen und Nässen sowie zur Überprüfung eines unterschiedlichen Aufwuchses zum dann folgenden optimalen Düngereinsatz genutzt werden. Wenn optische Filter, insbesondere Strahlungsfilter zum Einsatz kommen, besteht die Möglichkeit, Aufnahmen anzufertigen, die eine Aussage über notwendige Mediorationsarbeiten liefern.

Ein vom Fluggerät getragener Stickstoffsensor kann zur Kartierung des Stickstoffgehalts und damit der Pflanzendichte Verwendung finden, so dass entsprechend der Pflanzenmasse ein optimaler Düngereinsatz und von Pflanzenschutzmitteln realisierbar ist.

Im Fluggerät integrierte Feuchtesensoren dienen der Kartierung der relativen und absoluten Bodenfeuchte, ebenfalls zum Zweck eines optimalen Düngereinsatzes und/oder der Kartierung der relativen und absoluten Pflanzenfeuchte zur Bestimmung des optimalen Erntezeitpunkts und des Anschnittortes, z.B. bei Getreide.

Die Feuchtesensoren können auch zur Bestimmung der Pflanzenfeuchte (Benetzung) zur optimalen Steuerung des Einsatzes von Pflanzenschutzmitteln genutzt werden.

Über einen im Fluggerät integrierbaren Temperatursensor kann eine Kartierung der Bodentemperatur zur Bestimmung des optimalen Bearbeitungszeitpunkts erfolgen. Ebenso ist eine Kartierung der Bodentemperatur zur Bestimmung der relativen Bodenfeuchte möglich. Der Temperatursensor ist ergänzend in der Lage, eine Kartierung der Pflanzentemperatur zur Bestimmung des optimalen Erntezeitpunkts vorzunehmen.

Ein im Fluggerät integrierter Laserscanner kann ein exaktes Höhenmodell entlang der Flugroute bestimmen und Hindernisse erfassen.

## Patentansprüche

1. Verfahren zur Erfassung von Daten für eine teilflächenspezifische Behandlung oder Bearbeitung von Agrarflächen mittels Befliegung durch ein unbemanntes Kleinfluggerät, insbesondere einen Minihubschrauber,
wobei
eine Flugroutenplanung anhand zur Verfügung stehender Schlagdaten erfolgt, wobei der jeweilige Schlag in Sektoren unterteilt wird,
wobei ein Abfliegen der geplanten Route mit georeferenzierter optischer Aufzeichnung und Videodatenübertragung vorgenommen wird,
**dadurch gekennzeichnet, dass**
an vorbestimmten Punkten eine Reduzierung der Flughöhe und die Anfertigung von Detailaufnahmen realisiert wird.

2. Verfahren nach Anspruch 1,
**dadurch gekennzeichnet, dass**
anhand einer Übersichtsbefliegung für den relevanten Schlag eine Detailflugroute für besonders interessierende Flächen oder Orte (POIs) geplant und der Fluggerätesteuerung übergeben wird, so dass die POIs unmittelbar angeflogen und mit minimaler Flughöhe detektiert und kartiert werden können.

3. Verfahren nach Anspruch 2,
**dadurch gekennzeichnet, dass**
für die Kartierung ein Stickstoff-, Feuchte- und/oder Temperatursensor im Kleinfluggerät integriert ist, um den Stickstoffgehalt und hieraus die Pflanzendichte, die Bodenfeuchte, die Pflanzenfeuchte und/oder die Bodentemperatur zu bestimmen, um hieraus einen optimalen Bearbeitszeitraum zu ermitteln.

4. Verfahren nach Anspruch 3,
**dadurch gekennzeichnet, dass**
ausgehend von den erfassten Sensordaten in Verbindung mit einem hochauflösenden Höhe-über Grund-Messgerät eine schlagtypische Applikationskarte erstellt wird.

5. Verfahren nach Anspruch 4,
**dadurch gekennzeichnet, dass**
die Applikationskarte zur Steuerung einer Erntemaschine sowie zur Dokumentation eingesetzt wird.

6. Verfahren nach einem der vorangegangenen Ansprüche,
**dadurch gekennzeichnet, dass**
anhand der Befliegungsdaten eine Auswahl geeigneter landwirtschaftlicher Maschinen und Geräte für die jeweilige Behandlung oder Bearbeitung des Bodens und/oder der Bepflanzung getroffen wird.

## Claims

1. A method for capturing data for a partial surface specific treatment and processing of agricultural surfaces by flying over them with a small unmanned remote piloted aircraft, in particular a micro helicopter,
wherein flight route planning is performed based on provided partial surface data
wherein a respective partial surface is divided into sectors,
wherein a planned route is flown with geo referenced optical recording and video data transmission,
**characterized in that** a flight altitude is reduced and detail pictures are taken at predetermined points.

2. The method according to claim 1, **characterized in that** a detailed flight route for surfaces or points of interest (POIs) is planned based on an overview flight of the respective partial surface and the detailed flight route is transferred to a flight control so that the POIs can be approached directly and detected at minimum flight altitude and mapped.

3. The method according to claim 2, **characterized in that** a nitrogen sensor, humidity sensor and/or a temperature sensor is integrated in the remote piloted vehicle for the mapping in order to determine nitrogen content and therefrom plant density, ground humidity, plant humidity and/or ground temperature in order to determine an optimum time period for treatment.

4. The method according to claim 3, **characterized in that** an application map that is typical for the partial surface is generated based on the captured sensor data in cooperation with a high resolution altitude above ground measuring instrument.

5. The method according to claim 4, **characterized in that** the application map is used for controlling a harvester and for documentation purposes.

6. The method according to one of the preceding claims, **characterized in that** suitable agricultural machinery and equipment is selected for the respective treatment or processing and/or planting of the soil based on overflight data.

## Revendications

1. Procédé pour la saisie de données pour un traitement spécifique sur des surfaces partielles ou pour un traitement de surfaces agricoles, au moyen d'un survol par un appareil volant de petite taille sans pilote, en particulier un mini-hélicoptère, dans lequel
une planification d'itinéraire de vol a lieu au moyen de données de parcelles qui se trouvent à disposition,
dans lequel la parcelle respective est subdivisée en secteurs,
dans lequel un survol de l'itinéraire planifié est exécuté avec enregistrement optique doté de références géodésiques et transmission de données par vidéo,
**caractérisé en ce que** l'on réalise à des points prédéterminés une réduction de la hauteur de vol et que l'on exécute des enregistrements de détails.

2. Procédé selon la revendication 1,
**caractérisé en ce que** l'on planifie, au moyen d'un survol global pour la parcelle pertinente, un itinéraire de vol détaillé pour des surfaces ou des lieux particulièrement intéressants ("POI"), et on le transmet à la commande de l'appareil volant, de sorte que celui-ci se dirige directement vers les POI et que ceux-ci peuvent être détectés et cartographiés avec une hauteur de vol minimale.

3. Procédé selon la revendication 2,
**caractérisé en ce que** pour la cartographie un capteur d'azote, un capteur d'humidité et/ou un capteur de température est intégré dans l'appareil volant de petite taille, afin de déterminer la teneur en azote et à partir de celle-ci la densité des plantes, l'humidité du sol, l'humidité des plantes et/ou la température du sol, afin de déterminer à partir de celles-ci une période de traitement optimale.

4. Procédé selon la revendication 3,
**caractérisé en ce que**, en partant des données de capteur saisies et en association avec un appareil de mesure à hauteur au-dessus du sol et à haute résolution, on établit une carte d'application typique par parcelle.

5. Procédé selon la revendication 4,
**caractérisé en ce que** la carte d'application est employée pour commander une machine de récolte ainsi que pour la documentation.

6. Procédé selon l'une des revendications précédentes,
**caractérisé en ce que** l'on procède, au moyen des données de survol, à une sélection de machines et d'appareils agricoles appropriés pour le traitement respectif ou pour la préparation du sol et/ou pour la plantation.
